# EUROPÄISCHE PATENTSCHRIFT

(11) **EP 2 851 670 B1**
(45) Veröffentlichungstag und Bekanntmachung des Hinweises auf die Patenterteilung: **08.08.2018**
(21) Anmeldenummer: 14172973.1
(22) Anmeldetag: 18.06.2014
(51) Int. Cl.: G01M 17/02

(54) **Reifenprüfgerät, Reifenprüfanlage und Verfahren zur Reifenprüfung**
Tyre measurement device, tyre testing device and method for testing tyres
Appareil de vérification de pneu, installation de vérification de pneu et procédé de vérification de pneu

(30) Priorität: 21.06.2013 DE 102013010402
(43) Veröffentlichungstag der Anmeldung: 25.03.2015
(73) Patentinhaber: Carl Zeiss Optotechnik GmbH, 83115 Neubeuern (DE)
(72) Erfinder: Steinbichler, Dr. Marcus, 83115 Neubeuern (DE); Sun, Junli, 83064 Raubling (DE); Leitner, Berndhart, 83115 Neubeuern (DE); Otte, Stefan, 84478 Waldkraiburg (DE); Fuchs, Emanuel, 83026 Rosenheim (DE); Huber, Tobias, 85604 Zorneding (DE); Prams, Matthias, 83101 Rohrdorf (DE); Huber, Rainer, 83451 Piding (DE)
(74) Vertreter: Zinnecker, Armin

(56) Entgegenhaltungen:
- DE-A1- 2 641 516
- DE-A1-102006 053 161

## Beschreibung

Die Erfindung betrifft ein Reifenprüfgerät zur optischen, insbesondere interferometrischen Prüfung eines Reifens, eine Reifenprüfanlage mit einem derartigen Reifenprüfgerät und einem Reifenwender und ein Verfahren zur optischen, insbesondere interferometrischen Prüfung eines Reifens.

Ein Reifenprüfgerät nach dem Oberbegriff des Anspruchs 1 ist aus der EP 1 043 578 B1 bekannt.

Die EP 2 026 056 A2 offenbart eine Reifenprüfanlage nach dem Oberbegriff des Anspruchs 8. Die DE 2641516 A1 und die DE 10 2006 053 161 A1 offenbaren weitere aus dem Stand der Technik bekannte Reifenprüfgeräte.

Bei der optischen Reifenprüfung wird der Reifen mit Licht, im allgemeinen mit Weißlicht, bestrahlt. Der Reifen wird von einem oder mehreren Meßköpfen, die jeweils eine Meßoptik aufweisen, aufgenommen. Durch die optische Reifenprüfung können Oberflächenfehler des Reifens, insbesondere Kratzer, Schnitte und/oder Falten, und/oder Strukturfehler des Reifens, insbesondere Blasen und/oder Beulen, ermittelt werden. Die Ermittlung der Fehler kann durch einen Vergleich mit den benachbarten Bereichen des Fehlers, in dem die Oberfläche des Reifens keinen Fehler aufweist, und/oder durch einen Vergleich der aufgenommenen Istdaten des Reifens mit vorgegebenen Solldaten erfolgen. Die optische Prüfung des Reifens kann bei Umgebungsdruck erfolgen. Das Gehäuse des Reifenprüfgeräts kann geschlossen oder offen sein.

Bei der interferometrischen Prüfung von Reifen handelt es sich um ein relatives Prüfverfahren, bei dem die Oberflächenkontur des Reifens in zwei oder auch mehr unterschiedlichen Zuständen miteinander verglichen werden. Dabei werden die Reifen üblicherweise nacheinander mit einem oder mehreren Meßköpfen an unterschiedlichen Umfangspositionen geprüft. Die Meßköpfe werden so positioniert, daß ein Sektor der inneren Lauffläche und/oder der äußeren Seitenwand beobachtet werden kann. Um den Reifen vollständig zu prüfen, werden der oder die Meßköpfe abschnittsweise relativ zum Reifen weitergedreht, um auf diese Weise den kompletten Reifenumfang in mehreren, aufeinanderfolgenden Prüfungen zu erfassen.

Die vorbekannten Reifenprüfgeräte weisen eine Drehachse für den oder die Meßköpfe auf. Es gibt allerdings auch Reifenprüfgeräte, bei denen der Reifen gedreht wird. Der damit verbundene Zeitaufwand ist derzeit dafür verantwortlich, daß auf die eigentlich sinnvolle und wünschenswerte Komplettprüfung von Neureifen weitgehend verzichtet wird.

Hiervon ausgehend liegt der Erfindung die Aufgabe zugrunde, ein verbessertes Reifenprüfgerät der eingangs angegebenen Art, eine verbesserte Reifenprüfanlage der eingangs angegebenen Art und ein verbessertes Verfahren der eingangs angegebenen Art vorzuschlagen.

Bei einem Reifenprüfgerät der eingangs angegebenen Art wird diese Aufgabe durch die Merkmale des Anspruchs 1 gelöst. Das Reifenprüfgerät zur optischen Prüfung eines Reifens umfaßt eine Gehäuse mit einer Auflagefläche für den zu prüfenden Reifen, mehrere Meßköpfe, die jeweils eine Meßoptik aufweisen, zum Prüfen der inneren Lauffläche und/oder der äußeren Seitenfläche des Reifens und eine Positioniereinrichtung zum Positionieren einiger oder aller Meßköpfe in einer Ruheposition und in einer Meßposition. Erfindungsgemäß sind die Meßköpfe und die Auflagefläche drehfest angeordnet. Hierdurch wird das Reifenprüfgerät vereinfacht.

Bei der optischen Prüfung von Reifen wird die Reifenoberfläche mit einem bildgebenden Verfahren untersucht, um fehlertypische Besonderheiten zu erkennen.

Vorteilhafte Weiterbildungen sind in den Unteransprüchen beschrieben.

Vorteilhaft ist es, wenn das Reifenprüfgerät zur interferometrischen Prüfung eines Reifens ausgebildet ist und wenn das Gehäuse als Druckkammer ausgebildet ist. Bei der interferometrischen Prüfung des Reifens wird die Oberfläche des Reifens in zwei oder mehr unterschiedlichen Zuständen aufgenommen. Die Aufnahmen werden miteinander verglichen, wodurch Fehler des Reifens festgestellt werden können. Zur Erzeugung der unterschiedlichen Zustände des Reifens wird in der Druckkammer ein Überdruck oder ein Unterdruck erzeugt, vorzugsweise ein Unterdruck. In der Druckkammer ist eine Auflagefläche für den zu prüfenden Reifen vorhanden. Der zu prüfende Reifen ist üblicherweise nicht auf einer Felge montiert. Er liegt üblicherweise flach auf der Auflagefläche auf. Die Auflagefläche verläuft üblicherweise horizontal. Dann verläuft die Reifen-Mittenachse vertikal.

Die Meßköpfe umfassen eine Meßoptik und vorzugsweise eine oder mehrere Lichtquellen für kohärentes Licht, vorzugsweise Laserlicht. Die Lichtquellen werden vorzugsweise von Laserdioden gebildet.

Jeder Meßkopf weist ferner einen flächenhaften Sensor zur Aufnahme eines Bildes (Bildsensor) auf, insbesondere einen CCD-Sensor oder CMOS-Sensor. Die Meßoptik weist einen Bildwinkel auf. Der Bildwinkel ist von der Brennweite der Meßoptik und der Größe des Bildsensors abhängig. Das Gesichtsfeld der Meßoptik ergibt sich aus ihrem Bildwinkel und dem Abstand des Meßkopfs von der zu prüfenden Reifenoberfläche.

Die Ruheposition der Meßköpfe wird derart gewählt, daß sie die Positionierung des Meßkopfs in der Druckkammer nicht behindert. Insbesondere befindet sich die Ruheposition der Meßköpfe über dem auf der Auflagefläche liegenden Reifen. Die Meßposition der Meßköpfe kann mit der Ruheposition identisch sein. Sie kann sich allerdings auch von der Ruheposition unterscheiden.

Die Meßköpfe sind drehfest angeordnet. Auch die Auflagefläche ist drehfest angeordnet. Eine Relativdrehung zwischen den Meßköpfen und dem Reifen, der auf der Auflagefläche liegt, ist also nicht möglich. Die Meßköpfe sind vorzugsweise gleichmäßig über den Umfang des Reifens verteilt.

Die Meßköpfe zum Prüfen der inneren Lauffläche des Reifens können vertikal verfahrbar sein. Vorzugsweise sind diese Meßköpfe gemeinsam vertikal verfahrbar. Sie können dazu mechanisch gekoppelt sein. Es ist allerdings auch möglich, daß diese Meßköpfe durch eine Steuerung miteinander gekoppelt sind.

Vorteilhaft ist es, wenn die Meßköpfe zum Prüfen der äußeren Seitenfläche des Reifens vertikal verfahrbar sind. Sie sind vorzugsweise gemeinsam vertikal verfahrbar. Hierzu können die Meßköpfe mechanisch oder durch eine Steuerung gekoppelt sein.

Eine weitere vorteilhafte Weiterbildung ist dadurch gekennzeichnet, daß einer oder mehrere oder alle Meßköpfe zum Prüfen der inneren Lauffläche des Reifens und/oder einer oder mehrere oder alle Meßköpfe zum Prüfen der äußeren Seitenfläche des Reifens radial verfahrbar sind.

Vorzugsweise ist der Bildwinkel der Meßoptik eines oder mehrerer oder aller Meßköpfe verstellbar. Der Bildwinkel kann dadurch verstellbar sein, daß die Brennweite der Meßoptik verstellbar ist. Stattdessen oder zusätzlich kann der Auswertebereich des Bildsensors veränderbar sein, insbesondere dadurch, daß nur ein Teil der Pixel des Bildsensors ausgewertet wird.

Nach einer weiteren vorteilhaften Weiterbildung ist vorgesehen, daß die Meßköpfe zum Prüfen der inneren Lauffläche des Reifens einen Teil der inneren Lauffläche prüfen. Dies kann insbesondere dadurch realisiert werden, daß die Gesichtsfelder der Meßoptiken voneinander beabstandet sind. Die damit erreichbare Prüfung kann ausreichend sein. Insbesondere können dadurch Informationen über die Qualität des untersuchten Reifenloses und Fertigungsprozesses erhalten werden, die bereits ausreichend sein können.

Nach einer weiteren vorteilhaften Weiterbildung ist vorgesehen, daß die Meßköpfe zum Prüfen der inneren Lauffläche des Reifens die gesamte innere Lauffläche prüfen.

Das Reifenprüfgerät umfaßt vorzugsweise eine Einrichtung zum Ermitteln des Durchmessers und/oder der Höhe des Reifens. Durch diese Einrichtung können vorzugsweise noch weitere Eigenschaften des Reifens ermittelt werden.

Nach einer weiteren vorteilhaften Weiterbildung umfaßt das Reifenprüfgerät einen Speicher zum Speichern des Durchmessers und/oder der Höhe des Reifens und/oder weiterer Eigenschaften des Reifens. In dem Speicher können insbesondere die Eigenschaften des Reifens gespeichert werden, die durch die Einrichtung zum Ermitteln einer oder mehrerer Eigenschaften ermittelt worden sind, insbesondere der ermittelte Durchmesser und/oder die ermittelte Höhe des Reifens. Es ist allerdings auch möglich, daß diese Informationen von externen Quellen übernommen werden, beispielsweise von der Datenbank des Betreibers des Reifenprüfgeräts.

Nach einer weiteren vorteilhaften Weiterbildung umfaßt das Reifenprüfgerät eine Einrichtung zum Vorpositionieren und/oder Positionieren eines oder mehrerer oder aller Meßköpfe in Abhängigkeit vom Durchmesser und/oder der Höhe des Reifens und/oder von einer oder mehreren weiteren Eigenschaften des Reifens.

Insbesondere ist es möglich, daß die Meßköpfe in Abhängigkeit vom Durchmesser des Reifens in radialer Richtung vorpositioniert werden. Stattdessen oder zusätzlich können die Meßköpfe abhängig von der Höhe des Reifens in vertikaler Richtung vorpositioniert werden.

Die Meßköpfe können in Abhängigkeit vom Durchmesser des Reifens in radialer Richtung in die Meßposition positioniert werden. Stattdessen oder zusätzlich können sie in Abhängigkeit von der Höhe des Reifens in vertikaler Richtung in Meßposition positioniert werden.

Vorzugsweise umfaßt das Reifenprüfgerät eine Einrichtung zum Ermitteln der Kontur des Reifens, insbesondere der Außenkontur und/oder der Innenkontur. Hierdurch kann erreicht werden, daß für die Auswertung nur Pixel herangezogen werden, die innerhalb der Kontur liegen.

Dementsprechend ist es vorteilhaft, wenn das Reifenprüfgerät eine Einrichtung zum Auswerten der Ergebnisbilder innerhalb der Kontur aufweist. In diesem Fall ist es vorteilhaft, wenn nur diejenigen Bildpunkte der Ergebnisbilder ausgewertet werden, die innerhalb der Kontur liegen.

Eine erfindungsgemäße Reifenprüfanlage umfaßt ein erfindungsgemäßes Reifenprüfgerät und einen Reifenwender. Von einer derartigen Reifenprüfanlage wird ein Reifen in dem Reifenprüfgerät geprüft, anschließend durch den Reifenwender gewendet und schließlich erneut von dem Reifenprüfgerät geprüft.

Vorteilhaft ist es, wenn die Reifenprüfanlage einen Reifenwender zum lagerichtigen Wenden des Reifens aufweist. Dies ist insbesondere dann vorteilhaft, wenn von den Meßköpfen nur ein Teil der inneren Lauffläche des Reifens geprüft wird. In diesem Fall kann nach dem lagerichtigen Wenden des Reifens der verbleibende, noch nicht geprüfte Teil der inneren Lauffläche des Reifens geprüft werden.

Die Reifenprüfanlage kann ein zweites, erfindungsgemäßes Reifenprüfgerät aufweisen. In diesem Fall kann von dem ersten Reifenprüfgerät eine äußere Seitenfläche und ein Teil oder die Gesamtheit der inneren Lauffläche des Reifens geprüft werden. Nach dem Wenden kann die andere äußere Seitenfläche des Reifens und gegebenenfalls der verbleibende Teil der inneren Lauffläche geprüft werden. Es ist allerdings auch möglich, daß die gesamte innere Lauffläche nur von dem zweiten Reifenprüfgerät geprüft wird.

Bei einem Verfahren zur optischen Prüfung eines Reifens in einem Gehäuse, bei dem der Reifen von mehreren Meßköpfen geprüft wird, wird die Aufgabe der Erfindung durch die Merkmale des Anspruchs 9 gelöst. Die Meßköpfe und der Reifen führen keine Drehbewegung gegeneinander aus. Hierdurch kann das Verfahren vereinfacht und beschleunigt werden.

Nach einer vorteilhaften Weiterbildung wird der Reifen interferometrisch in einer Druckkammer geprüft. Die Prüfung erfolgt vorzugsweise in der Weise, daß der Reifen in einem ersten Zustand aufgenommen wird, daß der Reifen in einem zweiten, vom ersten Zustand abweichenden Zustand aufgenommen wird und daß die Aufnahmen miteinander verglichen werden.

Vorteilhaft ist es, wenn die Meßköpfe zum Prüfen der inneren Lauffläche des Reifens und/oder die Meßköpfe zum Prüfen der äußeren Seitenfläche des Reifens in vertikaler Richtung verfahren werden.

Die Meßköpfe zum Prüfen der inneren Lauffläche des Reifens und/oder die Meßköpfe zum Prüfen der äußeren Seitenfläche des Reifens werden vorzugsweise in radialer Richtung verfahren.

Nach einer weiteren vorteilhaften Weiterbildung prüfen die Meßköpfe zum Prüfen der inneren Lauffläche des Reifens einen Teil der inneren Lauffläche oder die gesamte innere Lauffläche des Reifens.

Vorteilhaft ist es, wenn einer oder mehrere oder alle Meßköpfe in Abhängigkeit vom Durchmesser und/oder der Höhe des Reifens und/oder einer oder mehrerer weiterer Eigenschaften des Reifens vorpositioniert und/oder positioniert werden.

Vorzugsweise werden nur diejenigen Bildpunkte der Ergebnisbilder ausgewertet, die innerhalb der Kontur des Reifens liegen.

Nach einer vorteilhaften Weiterbildung wird der Reifen in einem ersten Prüfdurchgang geprüft, gewendet und in einem zweiten Prüfdurchgang geprüft.

Vorteilhaft ist es, wenn in dem ersten Prüfdurchgang eine Hälfte der inneren Lauffläche des Reifens geprüft wird, der Reifen lagerichtig gewendet wird und in einem zweiten Prüfdurchgang die andere Hälfte der inneren Lauffläche des Reifens geprüft wird.

Nach einer weiteren vorteilhaften Weiterbildung wird ein zweiter Reifen in einem ersten Prüfdurchgang geprüft, während der erste Reifen gewendet wird. Hierdurch kann der Prüfungsvorgang weiter beschleunigt werden.

Ein Ausführungsbeispiel der Erfindung wird nachstehend anhand der beigefügten Zeichnung im einzelnen erläutert. In der Zeichnung zeigt
- Fig. 1: ein Reifenprüfgerät in einer perspektivischen Ansicht, wobei sich der Reifen außerhalb des Reifenprüfgeräts befindet,
- Fig. 2: einen Teil des Reifenprüfgeräts gemäß Fig. 1, wobei der Reifen auf der Auflagefläche des Reifenprüfgeräts aufliegt,
- Fig. 3: den Teil des Reifenprüfgeräts gemäß Fig. 2 in einer Ansicht von oben,
- Fig. 4: den Teil des Reifenprüfgeräts gemäß Fig. 2 und 3 in einer teilweisen Schnittansicht von oben,
- Fig. 5: den Teil des Reifenprüfgeräts gemäß Fig. 2 bis 4 in einer Seitenansicht, teilweise im Schnitt,
- Fig. 6: eine Abwandlung des Reifenprüfgeräts in einer der Fig. 4 entsprechenden Darstellung,
- Fig. 7: eine Abwandlung des Reifenprüfgeräts mit Meßköpfen zum Prüfen der inneren Lauffläche des Reifens, die vertikal verfahrbar sind, in einer der Fig. 5 entsprechenden Darstellung,
- Fig. 8: die Abwandlung gemäß Fig. 7 beim Prüfen eines Reifens mit einer geringeren Höhe,
- Fig. 9: eine Abwandlung des Reifenprüfgeräts nach Fig. 7 und 8, bei dem auch die Meßköpfe zum Prüfen der äußeren Seitenfläche des Reifens vertikal verfahrbar sind und bei dem alle Meßköpfe radial verfahrbar sind,
- Fig. 10: eine Reifenprüfanlage in einer Seitenansicht, teilweise im Schnitt,
- Fig. 11a: einen Reifenwender in einer Ausgangsstellung in einer Seitenansicht,
- Fig. 11b: den Reifenwender gemäß Fig. 11a in einer Zwischenstellung,
- Fig. 11c: den Reifenwender gemäß Fig. 11a und b in einer Endstellung,
- Fig. 12a-d: ein Ablaufschema für die Arbeitsweise der Reifenprüfanlage gemäß Fig. 10 mit einem Reifenprüfgerät mit vier Meßköpfen zum Prüfen der inneren Lauffläche des Reifens,
- Fig. 13a-c: ein Ablaufschema für die Arbeitsweise einer abgewandelten Reifenprüfanlage mit einem zweiten Reifenprüfgerät mit vier Meßköpfen zum Prüfen der inneren Lauffläche des Reifens,
- Fig. 14a-d: ein Ablaufschema für die Arbeitsweise der Reifenprüfanlage gemäß Fig. 10 mit einem Reifenprüfgerät mit drei Meßköpfen zum Prüfen der inneren Lauffläche des Reifens,
- Fig. 15a-d: ein Ablaufschema für die Arbeitsweise der Reifenprüfanlage gemäß Fig. 10 mit einem Reifenprüfgerät mit zwei Meßköpfen zum Prüfen der inneren Lauffläche des Reifens,
- Fig. 16: einen Teil des Reifenprüfgeräts mit einer Einrichtung zum Ermitteln der Kontur des Reifens und
- Fig. 17: eine Aufnahme der Einrichtung zum Ermitteln der Kontur des Reifens gemäß Fig. 16.

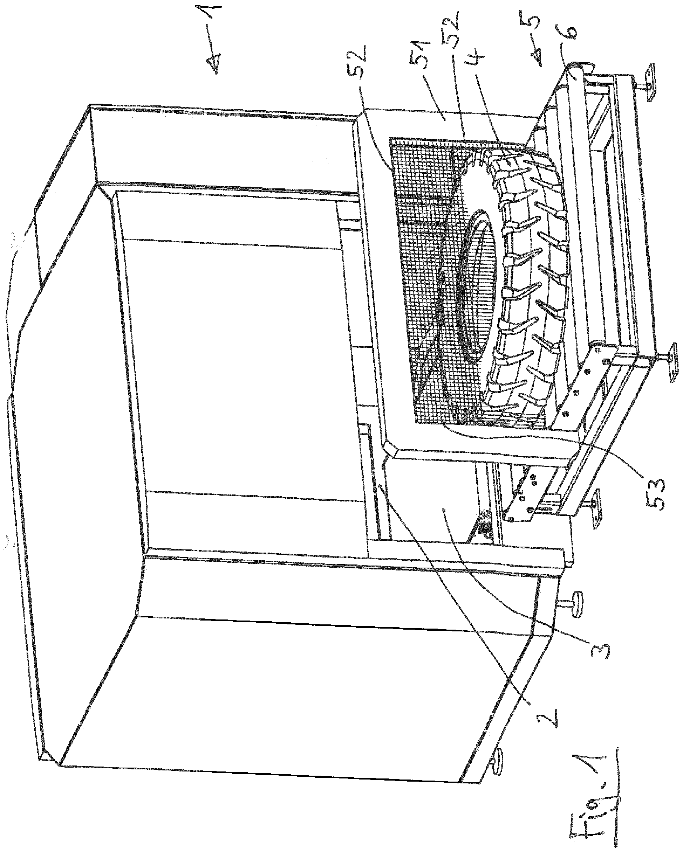

Das in Fig. 1 gezeigte Reifenprüfgerät zur optischen Prüfung eines Reifens umfaßt ein Gehäuse mit einer Auflagefläche 3 für den zu prüfenden Reifen 4. Es ist als Reifenprüfgerät zur interferometrischen Prüfung des Reifens 4 ausgebildet. Dementsprechend umfaßt das Reifenprüfgerät eine Druckkammer 1 mit einer Türöffnung 2, die von einer Schiebetüre verschließbar ist. Die Schiebetüre ist in vertikaler Richtung verschieblich geführt und antreibbar.

In der Druckkammer 1 ist eine horizontal verlaufende Auflagefläche 3 für einen zu prüfenden Reifen 4 angeordnet. Die Auflagefläche 3 befindet sich hinter der Türöffnung 2. Sie wird von einem Förderband gebildet, das durch eine von zwei Endrollen antreibbar ist. Vor der Türöffnung 2 ist ein Pufferband 5 angeordnet, das mehrere, horizontal verlaufende Rollen 6 aufweist, auf denen der Reifen 4 aufliegt. Der Reifen 4 ist nicht auf einer Felge montiert. Er wird über das Pufferband 5 durch die Türöffnung 2 auf die Auflagefläche 3 transportiert. Hierzu können eine oder mehrere Rollen 6 des Pufferbands 5 antreibbar sein.

Vor der Türöffnung 2 ist eine Einrichtung zum Ermitteln des Durchmessers und der Höhe des Reifens 4 vorgesehen. Diese Einrichtung umfaßt einen Rahmen 51, der höher und breiter ist als der Reifen 4. An dem Rahmen 51 sind gerichtete Lichtquellen 52 und Lichtempfänger 53 angeordnet. Die Lichtquellen 52 strahlen in horizontaler und vertikaler Richtung. Zu jeder Lichtquelle 52 gehört ein Lichtempfänger 53. Die Lichtquellen 52 und Lichtempfänger 53 bilden ein rechtwinkeliges Gitter zum Erfassen der Höhe und des Durchmessers des Reifens 4.

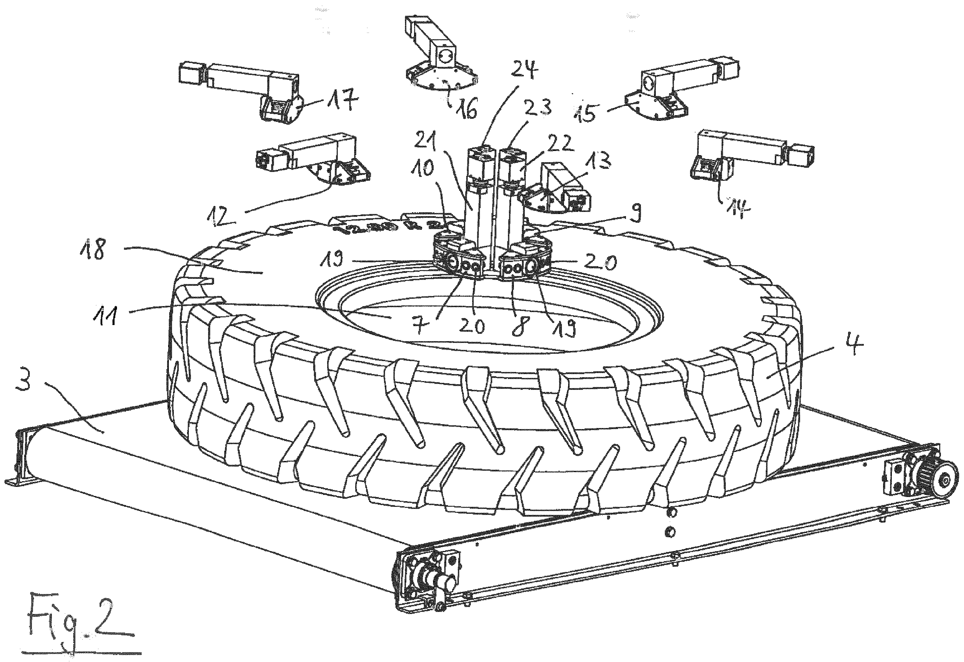

Wie aus Fig. 2 bis 5 ersichtlich weist das Prüfgerät vier Meßköpfe 7, 8, 9, 10 zum Prüfen der inneren Lauffläche 11 des Reifens 4 auf. Das Prüfgerät weist ferner sechs Meßköpfe 12, 13, 14, 15, 16, 17 zum Prüfen der äußeren Seitenfläche 18 des Reifens 4 auf. Jeder Meßkopf umfaßt eine Meßoptik 19 und vier Laserdioden 20, die sich beidseits der Meßoptik 19 befinden. Meßoptik 19 und Laserdioden 20 sind in einer Reihe angeordnet, wobei sich die Meßoptik 19 in der Mitte befindet.

Die Meßköpfe 7, 8, 9, 10 zum Prüfen der inneren Lauffläche 11 des Reifens 4 sind gleichmäßig über den Umfang verteilt. Sie sind in einem Winkelabstand von 90° angeordnet.

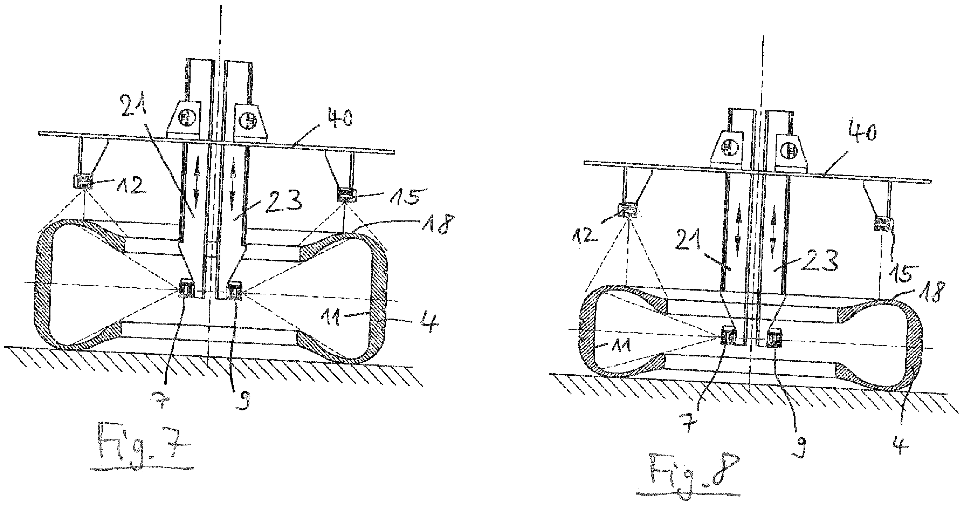

Die Meßköpfe 12, 13, 14, 15, 16, 17 zum Prüfen der äußeren Seitenfläche 18 des Reifens 4 sind an einem Träger 40 (siehe Fig. 7-9) befestigt. Sie sind nicht vertikal verfahrbar. Der Träger 40 befindet sich in der Druckkammer 1. Er ist nicht vertikal verfahrbar.

Die Meßköpfe 7, 8, 9, 10 zum Prüfen der inneren Lauffläche 11 des Reifens 4 sind vertikal verfahrbar. Hierzu ist jeder Meßkopf 7, 8, 9, 10 an dem unteren Ende einer vertikal verlaufenden Säule 21, 22, 23, 24 angeordnet, die vertikal verfahrbar ist. Die Säulen 21-24 sind an dem Träger 40 befestigt.

Sämtliche Meßköpfe 7, 8, 9, 10; 12, 13, 14, 15, 16, 17 sind drehfest angeordnet. Auch die Auflagefläche 3 für den Reifen 4 ist in der Kammer 1 drehfest angeordnet. Eine Relativdrehung zwischen den Meßköpfen und dem Reifen 4 ist also nicht möglich.

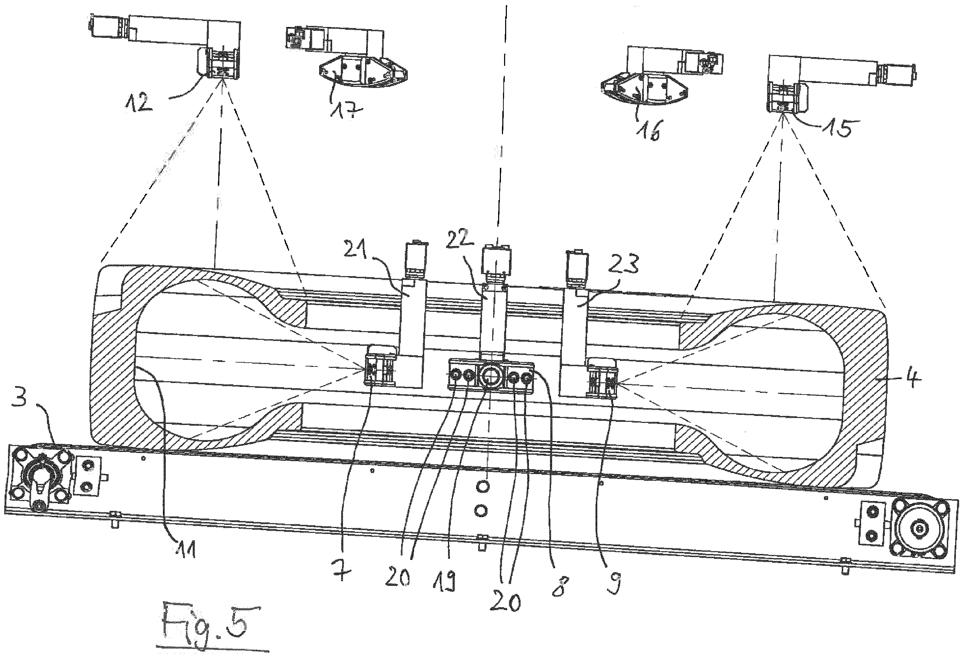

Zur Durchführung einer Prüfung wird der Reifen 4 in die Druckkammer 1 bewegt. Die Türe der Druckkammer 1 wird verschlossen. Die Meßköpfe 7, 8, 9, 10 zum Prüfen der inneren Lauffläche 11 des Reifens 4 werden aus der Ruheposition gemäß Fig. 2 vertikal nach unten verfahren, bis sie die in Fig. 5 gezeigte Meßposition einnehmen, in der sie sich in der Mitte der vertikalen Erstreckung der inneren Lauffläche 11 befinden. In dieser Position werden Aufnahmen hergestellt.

Bei der optischen Reifenprüfung ist es ausreichend, wenn von jedem Meßkopf eine Aufnahme hergestellt wird. Bei der interferometrischen Reifenprüfung werden von jedem Meßkopf mehrere, insbesondere zwei Aufnahmen hergestellt. Die Herstellung der ersten Aufnahmen erfolgt bei einem ersten Druck in der Druckkammer, bei dem es sich um den Umgebungsdruck handeln kann.

Danach wird der Druck in der Druckkammer verändert, vorzugsweise vermindert. Hierdurch können sich Fehlstellen im Material des Reifens 4 ausdehnen. Danach werden von den Meßköpfen weitere Aufnahmen des Reifens 4 hergestellt. Durch das interferometrische Prüfverfahren können Formänderungen des Reifens sichtbar gemacht werden.

Danach werden die Meßköpfe 7, 8, 9, 10 zum Prüfen der inneren Lauffläche 11 des Reifens 4 vertikal nach oben verfahren. Die Türe der Druckkammer 1 wird geöffnet, und der Reifen 4 wird herausbewegt.

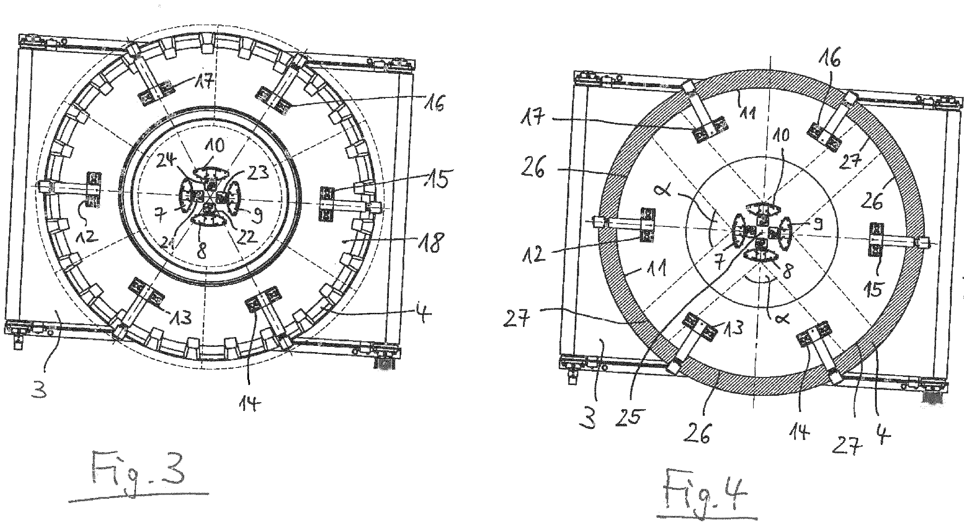

Wie aus Fig. 4 ersichtlich prüfen die Meßköpfe 7, 8, 9, 10 zum Prüfen der inneren Lauffläche 11 des Reifens 4 nur einen Teil der inneren Lauffläche 11. Der Bildwinkel α der Meßköpfe beträgt etwa 90°. Da sich die Meßköpfe 7, 8, 9, 10 allerdings im Abstand von der Mittenachse 25 des Reifens 4 befinden, ist das Gesichtsfeld 26 der Meßköpfe kleiner als ein Viertel des Umfangs der inneren Lauffläche 11, so daß benachbarte Gesichtsfelder 26 durch Lücken 27 unterbrochen werden. Für eine schnelle Prüfung des Reifens 4 kann die nicht vollständige Abdeckung der inneren Lauffläche 11 allerdings ausreichend sein. Wie aus Fig. 4 ersichtlich ist der Abstand des jeweiligen Meßkopfs 7, 8, 9, 10 von der inneren Lauffläche 11 geringer als der Abstand der inneren Lauffläche 11 von der Mittenachse 25 des Reifens 4, so daß das Gesichtsfeld 26 der Meßköpfe kleiner als 90° ist.

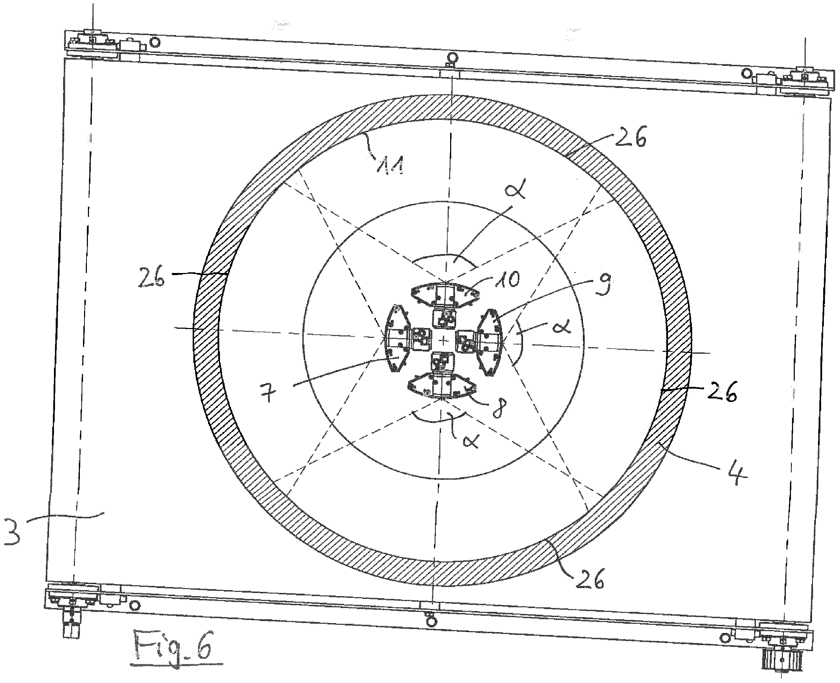

Bei der in Fig. 6 dargestellten Abwandlung des Reifenprüfgeräts sind die Bildwinkel α der Meßoptiken 19 der Meßköpfe 7, 8, 9, 10 zum Prüfen der inneren Lauffläche 11 größer als 90°. Sie betragen etwa 110 bis 130°, vorzugsweise 120°. Hier überlappen sich die Gesichtsfelder 26 benachbarter Meßköpfe 7-10, so daß keine Lücken entstehen. Die Meßoptiken 19 der Ausführungsformen nach Fig. 4 und 6 können verschieden sein. Insbesondere können sie sich in der Brennweite unterscheiden. Es ist allerdings auch möglich, daß für die Ausführungsformen der Fig. 4 und 6 dieselben Meßoptiken 19 verwendet werden, wobei die Brennweiten verstellbar sind. Auch bei dieser Ausführungsform ist der Abstand der Meßköpfe 7, 8, 9, 10 von der inneren Lauffläche 11 geringer als der Abstand der inneren Lauffläche 11 von der Mittenachse 25 des Reifens 4.

Fig. 7 und 8 zeigen die Anwendung des Reifenprüfgeräts für Reifen verschiedener Höhe. Wenn der in Fig. 8 gezeigte Reifen 4 mit einer geringeren Höhe geprüft werden soll, werden die Meßköpfe 7, 8, 9, 10 zum Prüfen der inneren Lauffläche 11 vertikal nach unten verfahren, bis sie in der Mitte der Höhe der inneren Lauffläche 11 liegen. Die Meßköpfe 12-17 zum Prüfen der äußeren Seitenfläche 18 sind an einem Träger 40, der fest in der Druckkammer 1 angeordnet ist, befestigt. Sie sind nicht vertikal verfahrbar. Sie weisen allerdings Meßoptiken 19 auf, deren Bildwinkel a verstellbar sind. Durch eine Änderung der Brennweite wird der Bildwinkel verkleinert, wenn ein Reifen 4 mit einer geringeren Höhe, wie in Fig. 8 dargestellt, geprüft werden soll.

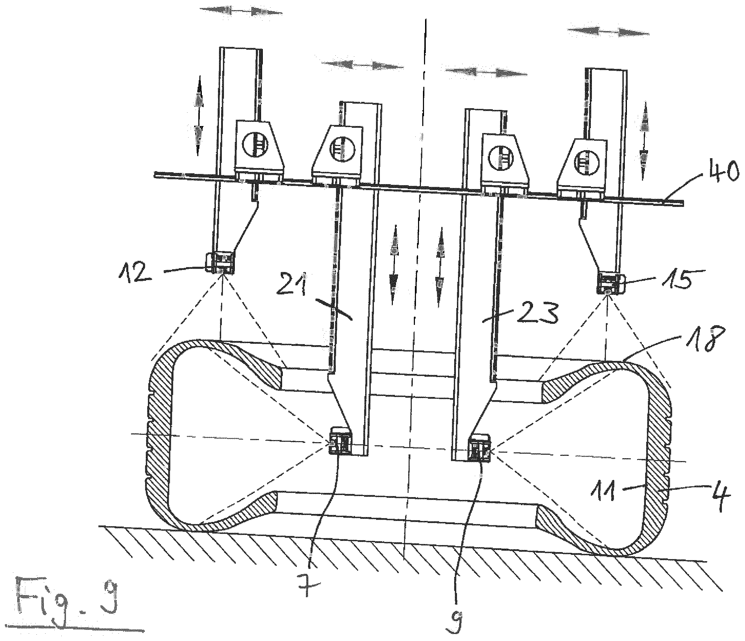

Bei der Ausführungsform nach Fig. 9 sind auch die Meßköpfe 12-17 zum Prüfen der äußeren Seitenwand 18 vertikal verfahrbar. Ferner sind bei dieser Ausführungsform sowohl die Meßköpfe 7-10 zum Prüfen der inneren Lauffläche 11 wie auch die Meßköpfe 12-17 zum Prüfen der äußeren Seitenfläche 18 radial verfahrbar.

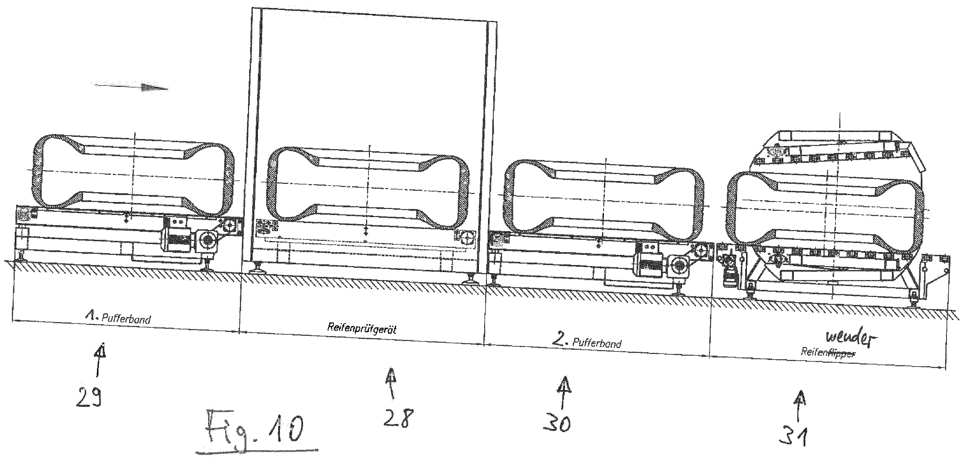

Fig. 10 zeigt eine Reifenprüfanlage mit einem Reifenprüfgerät 28 der bereits beschriebenen Art, einem ersten Pufferband 29, einem zweiten Pufferband 30 und einem Reifenwender 31. Das zweite Pufferband 30 liegt zwischen dem Reifenprüfgerät 28 und dem Reifenwender 31. Das erste Pufferband 29 liegt auf der dem zweiten Pufferband 30 gegenüberliegenden Seite des Reifenprüfgeräts 28. Bei allen Stationen 28, 29, 30, 31 ist jeweils eine Rolle der Auflagefläche, die von einem Förderband gebildet wird, durch einen Motor antreibbar. Das Reifenprüfgerät 28 weist zwei vertikale Türen auf, die längsverschieblich geführt sind und von denen eine dem ersten Pufferband 29 und die andere dem zweiten Pufferband 30 zugewandt ist.

Beim Betrieb wird ein Reifen von dem ersten Pufferband 29 in das Reifenprüfgerät 28 gefördert. Dort wird die obere äußere Seitenfläche des Reifens geprüft. Zusätzlich kann ein Teil der inneren Lauffläche oder die gesamte innere Lauffläche geprüft werden. Danach wird der Reifen dem zweiten Pufferband 30 zugeführt. Gleichzeitig kann ein zweiter Reifen vom ersten Pufferband 29 in das Reifenprüfgerät 28 gefördert werden.

Der auf dem zweiten Pufferband 30 liegende, erste Reifen wird dem Reifenwender 31 zugeführt und gewendet. Währenddessen kann der zweite Reifen im Reifenprüfgerät 28 geprüft werden.

Der erste Reifen wird nach dem Wenden zurück zum zweiten Pufferband 30 gefördert. Wenn die Prüfung des zweiten Reifens in dem Reifenprüfgerät 28 beendet ist, wird dieser zurück zum ersten Pufferband 29 gefördert. Der erste Reifen wird vom zweiten Pufferband 30 zum Reifenprüfgerät 28 gefördert. Die jetzt oben liegende äußere Seitenfläche wird geprüft. Gleichzeitig kann ein Teil oder die gesamte innere Lauffläche geprüft werden.

Wenn der erste Reifen auf diese Weise vollständig geprüft ist, wird er über das zweite Pufferband 30 und den Reifenwender 31, in dem er jetzt nicht mehr gewendet wird, in der Fig. 10 nach rechts zur nächsten Station (in der Zeichnung nicht dargestellt) weitergefördert. Der zweite Reifen wird vom ersten Pufferband 29 über das Reifenprüfgerät 28 und das zweite Pufferband 30 zum Reifenwender 31 gefördert. Gleichzeitig wird ein dritter Reifen über das erste Pufferband 29 in das Reifenprüfgerät 28 gefördert. Der zweite Reifen wird in dem Reifenwender 31 gewendet. Währenddessen wird der dritte Reifen in dem Reifenprüfgerät 28 geprüft.

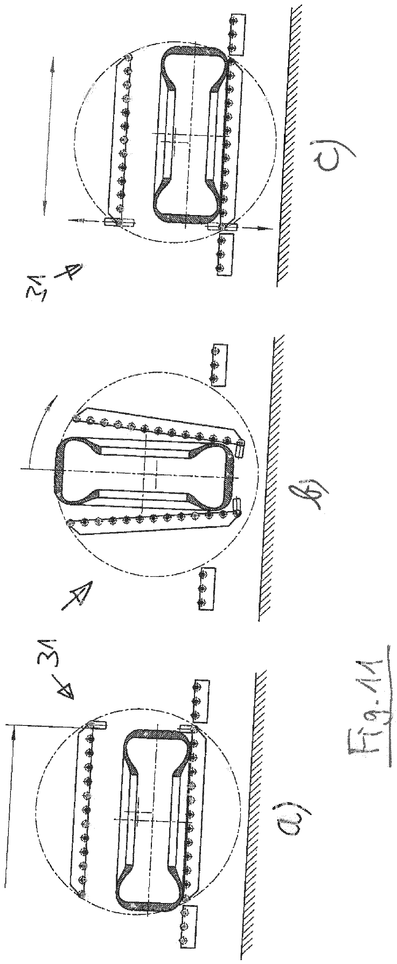

Fig. 11 zeigt die Funktion des Reifenwenders 31. Zunächst wird der Reifen 4 gemäß Fig. 11a in den Reifenwender 31 gefördert. Der Reifen 4 wird gemäß Fig. 11b gewendet. In der Endstellung gemäß Fig. 11c liegt der gewendete Reifen 4 in dem Reifenwender 31.

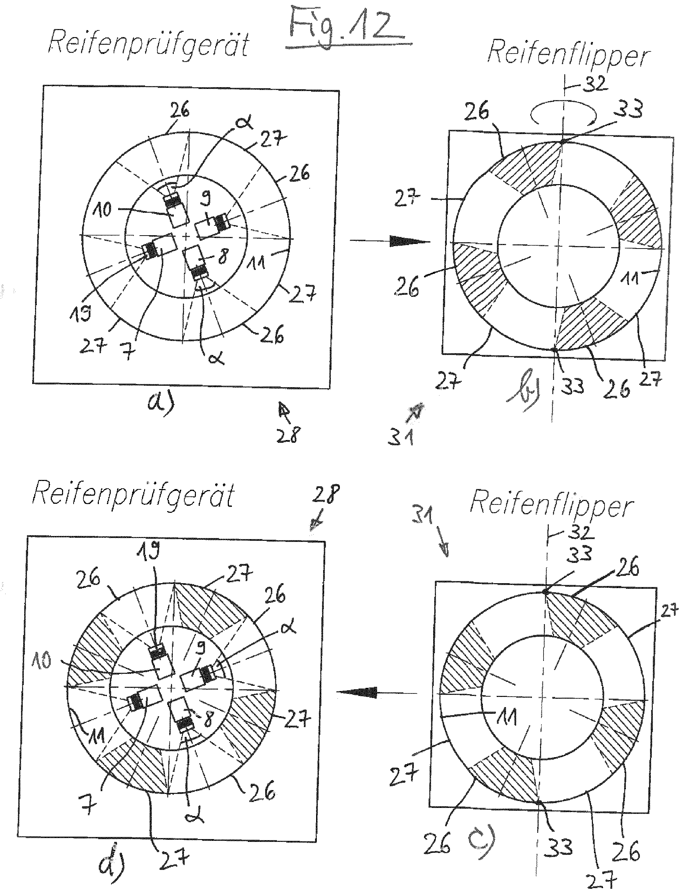

Fig. 12 zeigt ein Ablaufschema für die Arbeitsweise der Reifenprüfanlage gemäß Fig. 10. Dabei wird ein Reifenprüfgerät 28 gemäß Fig. 4 verwendet, bei dem die Meßköpfe 7-10 zum Prüfen der inneren Lauffläche 11 nur einen Teil der inneren Lauffläche 11 prüfen, bei dem also zwischen den Gesichtsfeldern 26 Lücken 27 bestehen. Die Gesichtsfelder 26 überdecken die Hälfte oder etwas mehr als die Hälfte des Umfangs der inneren Lauffläche 11.

In einem ersten Prüfdurchgang gemäß Fig. 12a wird der Teil der inneren Lauffläche 11 geprüft, der den Gesichtsfeldern 26 entspricht. Danach wird gemäß Fig. 12b der Reifen 4 lagerichtig gewendet, wie in Fig. 12c gezeigt. Die Wendeachse 32 des Reifenwenders 31 verläuft durch die Grenzen 33 zwischen einem Gesichtsfeld 26 und der benachbarten Lücke 27. Auf diese Weise ist gewährleistet, daß nach dem Wenden die Gesichtsfelder 26 an den Stellen liegen, an denen vorher die Lücken 27 gelegen haben, und umgekehrt.

Der lagerichtig gewendete Reifen 4 wird anschließend gemäß Fig. 12d in das Reifenprüfgerät 28 gefördert und in einem zweiten Prüfdurchgang erneut geprüft. Dabei werden diejenigen Teile des Umfangs der inneren Lauffläche 11 geprüft, die im ersten Prüfdurchgang nicht geprüft worden sind. Durch das geeignete Wenden des Reifens 4 können die beim ersten Prüfdurchgang nicht erfaßten Bereiche des Umfangs der Lauffläche 11 in dem zweiten Prüfdurchgang erfaßt werden, obwohl die Meßköpfe 7-10 zum Prüfen der inneren Lauffläche 11 und die Auflagefläche 3 für den Reifen 4 drehfest angeordnet sind. Dadurch kann der Reifen 3 auch mit einem einzigen Reifenprüfgerät sehr schnell geprüft werden. Die Arbeitsgeschwindigkeit des Reifenprüfgeräts kann noch gesteigert werden, wenn der nächste Reifen bereits im ersten Prüfdurchgang geprüft wird, während der erste Reifen gewendet wird.

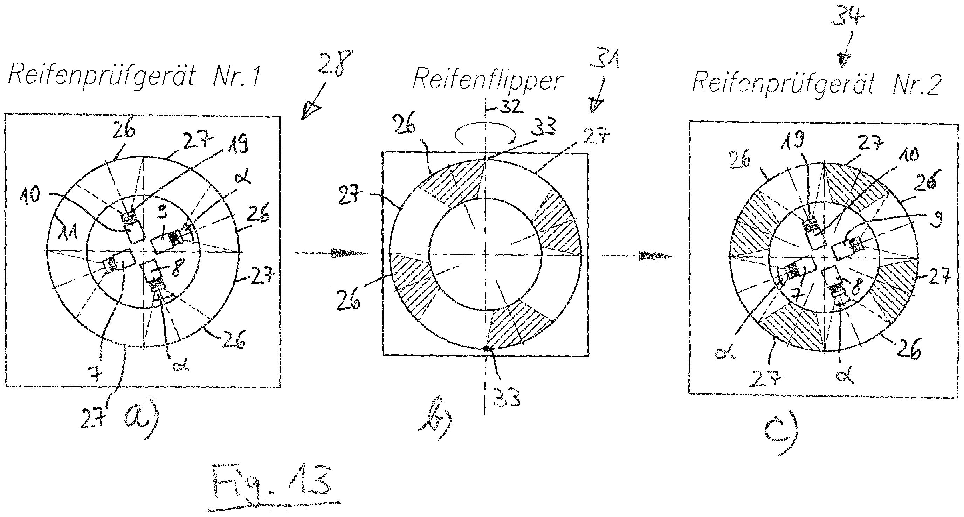

Fig. 13 zeigt ein Ablaufschema für die Arbeitsweise einer abgewandelten Reifenprüfanlage, die ein erstes Reifenprüfgerät 28, einen Reifenwender 31 und ein zweites Reifenprüfgerät 34 umfaßt. Auch hier wird ein Reifenprüfgerät gemäß Fig. 4 verwendet, bei dem nur ein Teil der inneren Lauffläche des Reifens geprüft wird. Dabei wird der Reifen allerdings nach dem lagerichtigen Wenden in dem Reifenwender 31 dem zweiten Reifenprüfgerät 34 zugeführt.

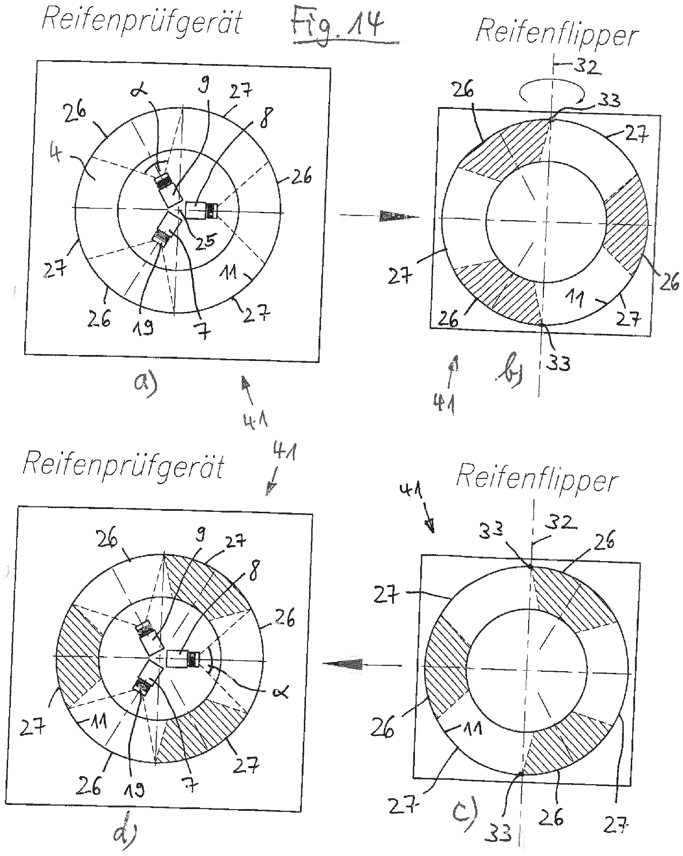

Fig. 14 zeigt ein Ablaufschema für die Arbeitsweise der Reifenprüfanlage gemäß Fig. 10. Dabei wird ein Reifenprüfgerät 41 verwendet, bei dem drei Meßköpfe 7, 8, 9 zum Prüfen der inneren Lauffläche 11 vorhanden sind. Die Meßköpfe 7, 8, 9 sind in einem gleichmäßigen Winkelabstand von 120° angeordnet. Sie befinden sich im Abstand von der Mittenachse 25 des Reifens 4. Der Abstand des jeweiligen Meßkopfs 7, 8, 9 von der inneren Lauffläche 11 ist geringer als der Abstand der inneren Lauffläche 11 von der Mittenachse 25. Der Bildwinkel α der Meßköpfe beträgt etwa 90°. Aufgrund des geringeren Abstands von der inneren Lauffläche 11 beträgt das Gesichtsfeld 26 der Meßköpfe etwa ein Sechstel des Umfangs der inneren Lauffläche 11, was auf der inneren Lauffläche 11 einem Winkel von etwa 60° entspricht.

Dementsprechend bleiben beim ersten Prüfdurchgang gemäß Fig. 14a Lücken 27 zwischen den Gesichtsfeldern 26. Nach dem lagerichtigen Wenden des Reifens gemäß Fig. 14b um die Wendeachse 32 liegen die Gesichtsfelder 26 an den Stellen, an denen vorher die Lücken 27 gelegen waren, und umgekehrt, wie aus Fig. 14c ersichtlich. Der lagerichtig gewendete Reifen 4 wird dann gemäß Fig. 14d in das Reifenprüfgerät 41 gefördert und in einem zweiten Prüfdurchgang erneut geprüft. Auf diese Weise kann die gesamte innere Lauffläche 11 erfaßt werden.

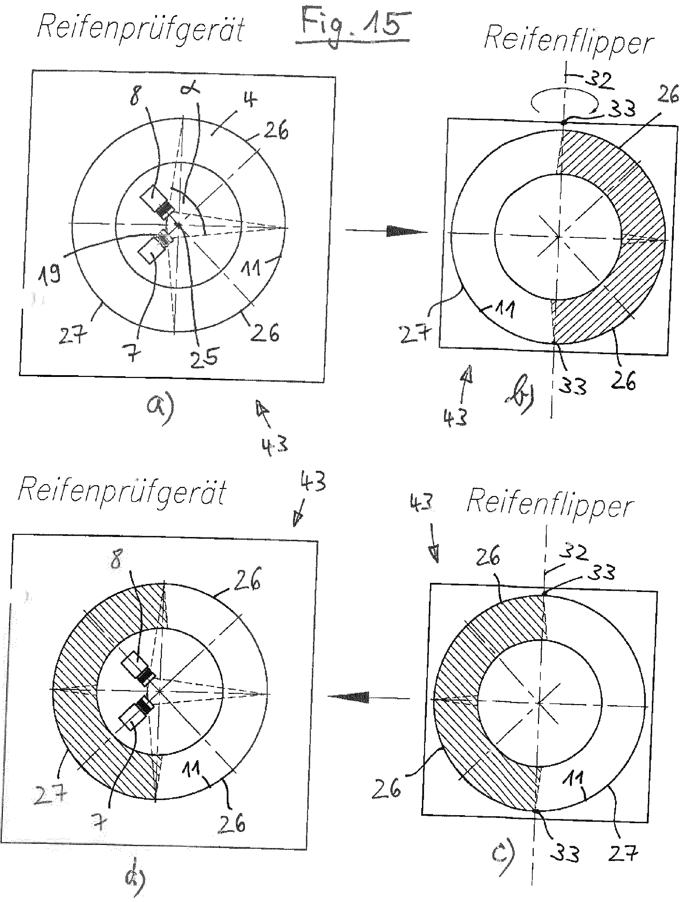

Fig. 15 zeigt ein weiteres Ablaufschema für die Arbeitsweise der Reifenprüfanlage gemäß Fig. 10. Dabei wird ein Reifenprüfgerät 43 mit zwei Meßköpfen 7, 8 verwendet. Die Meßköpfe 7, 8 sind in einem Abstand von der Mittenachse 25 des Reifens 4 angeordnet. Dabei ist der Abstand des jeweiligen Meßkopfs 7, 8 von der inneren Lauffläche 11 größer als der Abstand der inneren Lauffläche 11 von der Mittenachse 25. Der Bildwinkel α der Meßköpfe beträgt etwa 80°. Durch den vergrößerten Abstand von der inneren Lauffläche 11 überdecken die Gesichtsfelder 26 der Meßköpfe 7, 8 jeweils etwa ein Viertel des Umfangs der inneren Lauffläche 11, also einen Bildbereich von etwa 90° auf der inneren Lauffläche 11. Die Meßköpfe 7, 8 sind in einem Winkelabstand von 90° angeordnet.

Beim ersten Prüfdurchgang gemäß Fig. 15a liegen die Gesichtsfelder 26 aneinander an. Sie überdecken die Hälfte der inneren Lauffläche 11, also 180° der inneren Lauffläche 11. Der übrige Bereich der inneren Lauffläche 11 bildet eine Lücke 27, die sich über die andere Hälfte der inneren Lauffläche 11 erstreckt. Nach dem lagerichtigen Wenden des Reifens gemäß Fig. 15b liegen die Gesichtsfelder 26 an den Stellen, an denen vorher die Lücke 27 gelegen hat, und umgekehrt, wie aus Fig. 15c ersichtlich. Der lagerichtig gewendete Reifen 4 wird dann gemäß Fig. 15d in das Reifenprüfgerät 43 gefördert und in einem zweiten Prüfdurchgang erneut geprüft. Auf diese Weise kann die gesamte innere Lauffläche 11 erfaßt werden.

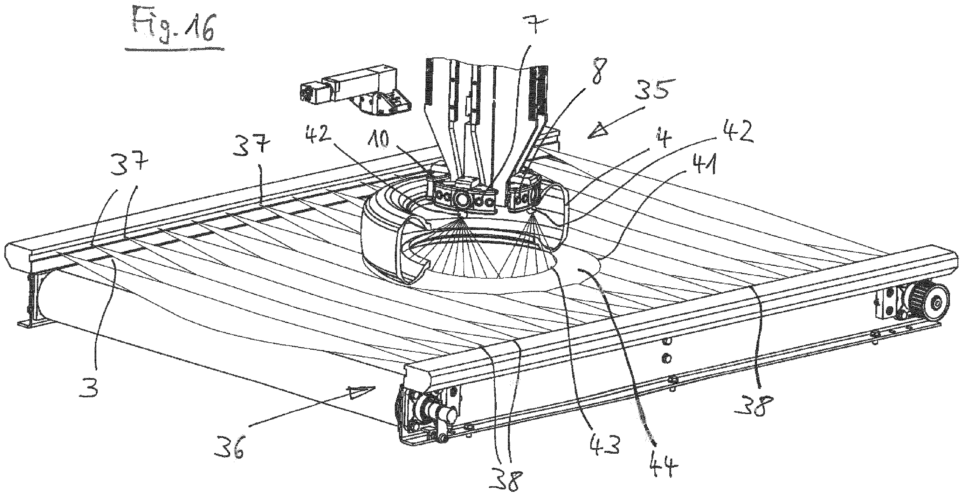

Fig. 16 zeigt eine Einrichtung zum Ermitteln der Kontur des Reifens 4. Diese Einrichtung umfaßt eine Einrichtung zum Ermitteln der Außenkontur 41 des Reifens 4, die zwei Reihen 35, 36 von Lichtquellen 37, 38 umfaßt, die zu beiden Seiten der Auflagefläche 3 vorgesehen sind. Die Reihen 35, 36 verlaufen parallel zur Förderrichtung des Reifens 4. Die Lichtquellen 37, 38 sind schräg auf die Auflagefläche 3 gerichtet. Die Lichtkegel benachbarter Lichtquellen 37, 38 überlappen einander.

Die Einrichtung zum Ermitteln der Kontur des Reifens 4 umfaßt ferner eine Einrichtung zum Ermitteln der Innenkontur 43 des Reifens 4. Diese Einrichtung umfaßt Lichtquellen 42, die an den Meßköpfen 7, 8, 9, 10 angeordnet sind. Die Lichtquellen 42 strahlen von den Meßköpfen nach unten. Sie weisen einen Öffnungswinkel auf, der so groß ist, daß die gesamte Innenkontur 43 des Reifens 4 ausgeleuchtet wird.

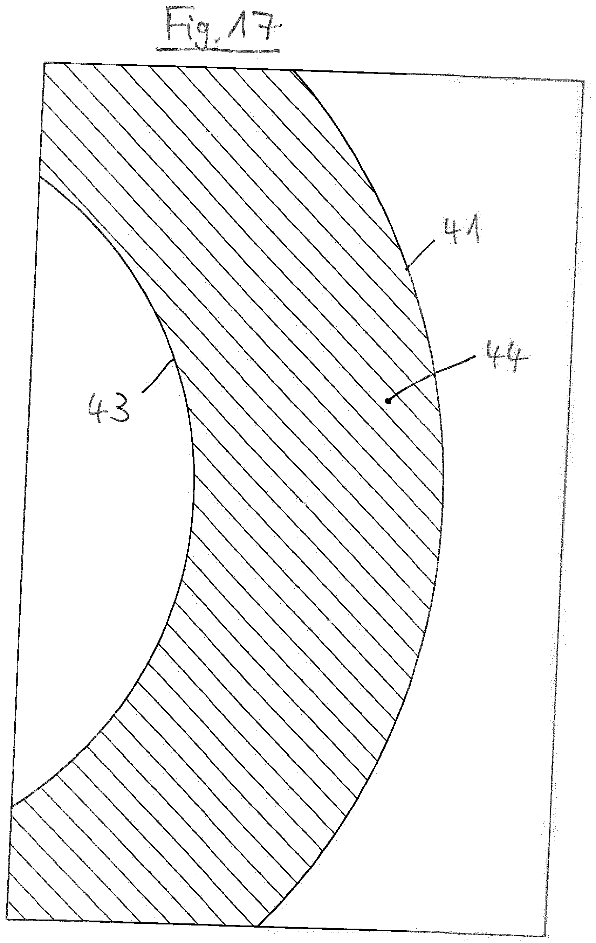

Durch die Lichtquellen 37, 38, 42 wird die Auflagefläche 3 beleuchtet. Der Bereich zwischen der Außenkontur 41 und der Innenkontur 43 wird von dem Reifen 4 abgedeckt. Dadurch bleibt die Ringfläche 44 zwischen der Außenkontur 41 und der Innenkontur 43, die der Auflagefläche des Reifens 4 entspricht, dunkel, wie in Fig. 17 gezeigt. Es werden nur diejenigen Bildpunkte der Ergebnisbilder ausgewertet, die innerhalb der Kontur des Reifens 4 liegen, die also in der Ringfläche 44 zwischen der Außenkontur 41 und der Innenkontur 43 liegen.

Die Außenkontur 41 und/oder die Innenkontur 43 des Reifens 4 können in einem Speicher abgespeichert werden. Abhängig von diesen Werten können die Meßköpfe positioniert werden.

Es ist ferner möglich, bereits vorher abgespeicherte Werte für die Außenkontur und/oder die Innenkontur und/oder den Durchmesser und/oder die Höhe des Reifens zum Vorpositionieren der Meßköpfe zu verwenden. Diese Vorpositionierung kann bereits stattfinden, nachdem die Art des Reifens, der sich noch außerhalb des Reifenprüfgeräts befindet, erfaßt oder eingelesen worden ist. Wenn sich der Reifen in der Meßposition befindet, können die Meßköpfe dann endgültig positioniert werden. Hierdurch kann eine wesentliche Zeitersparnis erreicht werden, da die Meßköpfe nach dem Positionieren des Reifens nur noch über die verbleibenden Verfahrwege verstellt werden müssen. Hierdurch kann eine wesentliche Zeitersparnis erreicht werden, da die Meßköpfe nach dem Positionieren des Reifens nur noch über die verbleibenden Fahrwege verstellt werden müssen

Die Außenkontur und/oder die Innenkontur des Reifens, die durch die Auswertung des Schattenwurfs erkannt worden sind, können zur Bestimmung des optimalen Bildausschnitts verwendet werden. Sie können also dazu verwendet werden, die Meßköpfe in vertikaler und/oder radialer Richtung zu positionieren und/oder den Bildwinkel der Meßköpfe einzustellen. Ferner ist es auf der Grundlage der ermittelten Außenkontur und/oder Innenkontur des Reifens möglich, Bildbereiche zu maskieren, die nicht zum Reifen gehören. Es ist möglich, nur die relevanten Bildbereiche in die Auswertung einzubeziehen und/oder auszugeben, beispielsweise auf einem Bildschirm. Ferner ist es möglich, die erhaltenen Ergebnisbilder nur innerhalb der erkannten Außenkontur und/oder Innenkontur auszuwerten. Im Rahmen dieser Auswertung können Fehlstellen identifiziert, klassifiziert und/oder gezählt werden. Ferner ist es möglich, den Reifen auf der Grundlage der Auswertung für die weitere Verwendung einzustufen, beispielsweise als verwendbarer oder nicht verwendbarer Reifen. Zusätzlich kann das Ergebnis der automatischen Fehlstellenerkennung manuell nachbearbeitet werden.

Gemäß der Erfindung kann durch geschickte Anordnung mehrerer Meßköpfe auf eine Relativdrehung zwischen Reifen und Meßköpfen verzichtet werden. Dabei kann mit einem kurzen Prüfvorgang ohne Drehbewegung ein Reifen zumindest teilweise sehr schnell geprüft werden. Bei diesem Prüfvorgang kann die obere Seitenwand des liegenden Reifens und zumindest die Hälfte der inneren Lauffläche des Reifens geprüft werden. Diese schnelle Prüfung kann bereits ausreichend sein, um Informationen über die Qualität des untersuchten Reifenloses und des Fertigungsprozesses zu erhalten.

Durch eine Aufweitung des Meßfeldes der Meßköpfe für die innere Lauffläche können mit einem Meßkopf auch 90% oder mehr der inneren Lauffläche oder die gesamte innere Lauffläche erfaßt und geprüft werden (Fig. 6).

Vorteilhaft ist es, wenn die Transportvorgänge der Reifen in der Reifenprüfanlage synchron ablaufen. Diese Synchronität kann dadurch hergestellt werden, daß der Reifenwender und alle Reifenprüfgeräte in der Lage sind, gleichzeitig einen Reifen an die Folgestation abzugeben und einen neuen Reifen von der vorgelagerten Station zu übernehmen. Wenn eine Transportstation dazu nicht in der Lage ist, kann ein Pufferband eingeschaltet werden, das dazu dient, einen Reifen synchron von der vorgelagerten Station zu übernehmen, während ein anderer Reifen an die Folgestation übergeben wird, und erst danach den Reifen von der Pufferstation in die Transportstation zu übernehmen. Die Pufferbänder können allerdings auch dazu dienen, um eventuell erforderliche Beruhigungszeiten zum Abklingen von Störungen im Reifen nach dem Wenden zu ermöglichen, ohne die Gesamtprüfzeit der sequentiellen Prüfvorrichtung zu beeinträchtigen.

Vorteilhaft ist es, wenn die Meßköpfe in vertikaler und radialer Richtung gegenüber dem Reifen positioniert werden. Dann ist es möglich, auch ohne optische Anpassungen der Meßköpfe einen optimalen Bildausschnitt aufzunehmen. Stattdessen oder zusätzlich können allerdings auch die Bildwinkel der Meßköpfe veränderbar sein. Vorteilhaft ist es, wenn die Meßköpfe zum Prüfen der inneren Lauffläche und die Meßköpfe zum Prüfen der äußeren Seitenwand getrennt verfahrbar sind. Hierdurch wird es insbesondere ermöglicht, durch kleinere Massen schnellere Bewegungen durchzuführen.

Ferner ist es vorteilhaft, in Vorkenntnis der Reifendimensionen die Meßköpfe bereits vorzupositionieren, bevor der Reifen innerhalb des Prüfgeräts positioniert ist, um durch kurze verbleibende Fahrwege die Zeit zum endgültigen Positionieren der Meßköpfe in der endgültigen Meßposition zu verkürzen. Zu diesem Zweck können Informationen über Reifendimensionen von externen Quellen wie einer Datenbank des Kunden übernommen werden. Ferner können die Reifendimensionen an vorgeschalteten Maschinen gemessen werden.

## Patentansprüche

1. Reifenprüfgerät zur optischen Prüfung eines Reifens (4), umfassend
ein Gehäuse mit einer Auflagefläche (3) für den zu prüfenden Reifen (4),
mehrere Messköpfe (7, 8, 9, 10), die jeweils eine Messoptik (19) aufweisen, zum Prüfen der inneren Lauffläche (11) des Reifens (4)
und eine Positioniereinrichtung (21, 22, 23, 24) zum Positionieren der Messköpfe (7-10) in einer Ruheposition und in einer Messposition, wobei die Messköpfe (7-10) vertikal verfahrbar sind,
**dadurch gekennzeichnet,**
**dass** die Messköpfe (7-10) und die Auflagefläche (3) drehfest angeordnet sind.

2. Reifenprüfgerät nach Anspruch 1, **gekennzeichnet durch** mehrere Messköpfe (12, 13, 14, 15, 16, 17), die jeweils eine Messoptik (19) zum Prüfer der äußeren Seitenfläche (18) des Reifens (4) aufweisen.

3. Reifenprüfgerät nach Anspruch 1 oder 2, **dadurch gekennzeichnet, dass** das Reifenprüfgerät zur interferometrischen Prüfung eines Reifens (4) ausgebildet ist und dass das Gehäuse als Druckkammer (1) ausgebildet ist.

4. Reifenprüfgerät nach Anspruch 2 oder 3, **dadurch gekennzeichnet, dass** die Messköpfe (12-17) zum Prüfen der äußeren Seitenfläche (18) des Reifens (4) vertikal verfahrbar sind
und/oder dass einer oder mehrere oder alle Messköpfe (7-10) zum Prüfen der inneren Lauffläche (11) des Reifens (4) und/oder einer oder mehrere oder alle Messköpfe (12-17) zum Prüfen der äußeren Seitenfläche (18) des Reifens (4) radial verfahrbar sind
und/oder dass der Bildwinkel (a) der Messoptik (19) eines oder mehrerer oder aller Messköpfe (7-10; 12-17) verstellbar ist.

5. Reifenprüfgerät nach einem der vorhergehenden Ansprüche, **dadurch gekennzeichnet, dass** die Messköpfe (7-10) zum Prüfen der inneren Lauffläche (11) des Reifens (4) einen Teil der inneren Lauffläche (11) prüfen oder dass die Messköpfe (7-10) zum Prüfen der inneren Lauffläche (11) des Reifens (4) die gesamte innere Lauffläche (11) prüfen.

6. Reifenprüfgerät nach einem der vorhergehenden Ansprüche, **gekennzeichnet durch** eine Einrichtung zum Ermitteln und/oder einen Speicher zum Speichern des Durchmessers und/oder der Höhe des Reifens (4)
und/oder durch eine Einrichtung zum Vorpositionieren und/oder Positionieren eines oder mehrerer oder aller Messköpfe (7-10; 12-17) in Abhängigkeit vom Durchmesser und/oder der Höhe des Reifens (4)
und/oder durch eine Einrichtung zum Ermitteln und/oder zum Darstellen und/oder zum Auswerten der Kontur des Reifens (4)
und/oder durch eine Einrichtung zum Auswerten der Ergebnisbilder innerhalb der Kontur.

7. Reifenprüfanlage, umfassend ein Reifenprüfgerät (28) nach einem der Ansprüche 1 bis 5 und einen Reifenwender (31), vorzugsweise einen Reifenwender (31) zum lagerichtigen Wenden des Reifens (4).

8. Reifenprüfanlage nach Anspruch 7, **gekennzeichnet durch** ein zweites Reifenprüfgerät (33) nach einem der Ansprüche 1 bis 5.

9. Verfahren zur interferometrischen Prüfung eines Reifens (4) mit einem Reifenprüfgerät nach einem der Ansprüche 1 bis 5,
**dadurch gekennzeichnet,**
**dass** die Messköpfe (7-10; 12-17) und der Reifen (4) keine Drehbewegung gegeneinander ausführen.

10. Verfahren nach Anspruch 9, **dadurch gekennzeichnet, dass** der Reifen interferometrisch in einer Druckkammer geprüft wird.

11. Verfahren nach Anspruch 9 oder 10, **dadurch gekennzeichnet, dass** die Messköpfe (7-10) zum Prüfen der inneren Lauffläche (11) des Reifens (4) und/oder die Messköpfe (12-17) zum Prüfen der äußeren Seitenfläche (18) des Reifens (4) in vertikaler Richtung verfahren werden,
und/oder dass die Messköpfe (7-10) zum Prüfen der inneren Lauffläche (11) des Reifens (4) und/oder die Messköpfe (12-17) zum Prüfen der äußeren Seitenfläche (18) des Reifens (4) in radialer Richtung verfahren werden.

12. Verfahren nach einem der Ansprüche 9 bis 11, **dadurch gekennzeichnet, dass** die Messköpfe (7-10) zum Prüfen der inneren Lauffläche (11) des Reifens (4) einen Teil der inneren Lauffläche (11) oder die gesamte innere Lauffläche (11) prüfen.

13. Verfahren nach einem der Ansprüche 9 bis 12, **dadurch gekennzeichnet, dass** einer oder mehrere oder alle Messköpfe (7-10; 12-17) in Abhängigkeit vom Durchmesser und/oder der Höhe des Reifens (4) vorpositioniert und/oder positioniert werden
und/oder dass nur diejenigen Bildpunkte der Ergebnisbilder ausgewertet werden, die innerhalb der Kontur des Reifens liegen.

14. Verfahren nach einem der Ansprüche 9 bis 13, **dadurch gekennzeichnet, dass** der Reifen (4) in einem ersten Prüfdurchgang geprüft, gewendet und in einem zweiten Prüfdurchgang geprüft wird.

15. Verfahren nach einem der Ansprüche 9 bis 14, **dadurch gekennzeichnet, dass** in dem ersten Prüfdurchgang eine Hälfte der inneren Lauffläche (11) des Reifens (4) geprüft wird, dass der Reifen (4) lagerichtig gewendet wird und dass in einem zweiten Prüfdurchgang die andere Hälfte der inneren Lauffläche (11) des Reifens (4) geprüft wird.

16. Verfahren nach Anspruch 14 oder 15, **dadurch gekennzeichnet, dass** ein zweiter Reifen in einem ersten Prüfdurchgang geprüft wird, während der erste Reifen gewendet wird.

## Claims

1. Tyre testing device for optically testing a tyre (4), comprising
a housing with a support face (3) for the tyre (4) to be tested,
a plurality of measuring heads (7, 8, 9, 10) which each have measuring optics (19) for testing the internal tread (11) of the tyre (4),
and a positioning device (21, 22, 23, 24) for positioning the measuring heads (7-10) in a position of rest and in a measuring position, wherein the measuring heads (7-10) can be moved vertically,
**characterized**
**in that** the measuring heads (7-10) and the support face (3) are arranged in a rotationally fixed fashion with respect to one another.

2. Tyre testing device according to Claim 1, **characterized by** a plurality of measuring heads (12, 13, 14, 15, 16, 17) which each have measuring optics (19) for testing the external side face (18) of the tyre (4).

3. Tyre testing device according to Claim 1 or 2, **characterized in that** the tyre testing device is designed to perform interferometric testing of a tyre (4), and **in that** the housing is embodied as a pressure chamber (1).

4. Tyre testing device according to Claim 2 or 3, **characterized in that** the measuring heads (12-17) can be moved vertically in order to test the outer side face (18) of the tyre (4),
and/or **in that** one or more or all of the measuring heads (7-10) can be moved radially in order to test the inner tread (11) of the tyre (4) and/or one or more or all of the measuring heads (12-17) can be moved radially in order to test the outer side face (18) of the tyre (4),
and/or **in that** the image angle (α) of the measuring optics (19) of one or more or of all the measuring heads (7-10; 12-17) can be adjusted.

5. Tyre testing device according to one of the preceding claims, **characterized in that** the measuring heads (7-10) for testing the inner tread (11) of the tyre (4) can test part of the inner tread (11), or **in that** the measuring heads (7-10) for testing the inner tread (11) of the tyre (4) test the entire inner tread (11).

6. Tyre testing device according to one of the preceding claims, **characterized by** a device for determining, and/or a memory for storing, the diameter and/or the height of the tyre (4),
and/or by a device for pre-positioning and/or positioning one or more or all of the measuring heads (7-10; 12-17) as a function of the diameter and/or the height of the tyre (4),
and/or by a device for determining and/or for displaying and/or for evaluating the contour of the tyre (4),
and/or by a device for evaluating the result images within the contour.

7. Tyre testing installation comprising a tyre testing device (28) according to one of Claims 1 to 5, and a tyre turner (31), preferably a tyre turner (31) for the positionally correct turning of the tyre (4).

8. Tyre testing installation according to Claim 7, **characterized by** a second tyre testing device (33) according to one of Claims 1 to 5.

9. Method for the interferometric testing of a tyre (4) with a tyre testing device according to one of Claims 1 to 5,
**characterized**
**in that** the measuring heads (7-10; 12-17) and the tyre (4) do not execute a rotational movement with respect to one another.

10. Method according to Claim 9, **characterized in that** the tyre is checked interferometrically in a pressure chamber.

11. Method according to Claim 9 or 10, **characterized in that** the measuring heads (7-10) for testing the inner tread (11) of the tyre (4) and/or the measuring heads (12-17) for testing the outer side face (18) of the tyre (4) are moved in the vertical direction,
and/or **in that** the measuring heads (7-10) for testing the inner tread (11) of the tyre (4) and/or the measuring heads (12-17) for testing the outer side face (18) of the tyre (4) are moved in the radial direction.

12. Method according to one of Claims 9 to 11, **characterized in that** the measuring heads (7-10) for testing the inner tread (11) of the tyre (4) test a part of the inner tread (11) or the entire inner tread (11).

13. Method according to one of Claims 9 to 12, **characterized in that** one or more or all of the measuring heads (7-10; 12-17) are pre-positioned and/or positioned as a function of the diameter and/or the height of the tyre (4),
and/or **in that** only those pixels of the result images which lie within the contour of the tyre are evaluated.

14. Method according to one of Claims 9 to 13, **characterized in that** in a first testing pass the tyre (4) is tested, turned and tested in a second testing pass.

15. Method according to one of Claims 9 to 14, **characterized in that** in the first testing pass half of the inner tread (11) of the tyre (4) is tested, **in that** the tyre (4) is turned in a positionally correct fashion, and **in that** in a second testing pass the other half of the inner tread (11) of the tyre (4) is tested.

16. Method according to Claim 14 or 15, **characterized in that** in a first testing pass a second tyre is tested while the first tyre is being turned.

## Revendications

1. Appareil de vérification de pneus pour la vérification optique d'un pneu (4), comprenant :
un boîtier comprenant une surface d'appui (3) pour le pneu (4) à vérifier,
plusieurs têtes de mesure (7, 8, 9, 10), qui présentent à chaque fois une optique de mesure (19) pour vérifier la surface de roulement intérieure (11) du pneu (4),
et un dispositif de positionnement (21, 22, 23, 24) pour positionner les têtes de mesure (7-10) dans une position de repos et dans une position de mesure, les têtes de mesure (7-10) pouvant être déplacées verticalement,
**caractérisé en ce que**
les têtes de mesure (7-10) et la surface d'appui (3) sont disposées de manière solidaire en rotation.

2. Appareil de vérification de pneus selon la revendication 1, **caractérisé par** plusieurs têtes de mesure (12, 13, 14, 15, 16, 17) qui présentent chacune une optique de mesure (19) pour vérifier la surface latérale extérieure (18) du pneu (4).

3. Appareil de vérification de pneus selon la revendication 1 ou 2, **caractérisé en ce que** l'appareil de vérification de pneus est réalisé pour effectuer une vérification par interférométrie d'un pneu (4) et **en ce que** le boîtier est réalisé sous forme de chambre de pression (1).

4. Appareil de vérification de pneus selon la revendication 2 ou 3, **caractérisé en ce que** les têtes de mesure (12-17) peuvent être déplacées verticalement pour vérifier la surface latérale extérieure (18) du pneu (4)
et/ou **en ce qu'**une ou plusieurs ou la totalité des têtes de mesure (7-10) peuvent être déplacées radialement pour vérifier la surface de roulement intérieure (11) du pneu (4) et/ou une ou plusieurs ou la totalité des têtes de mesure (12-17) peuvent être déplacées radialement pour vérifier la surface latérale extérieure (18) du pneu (4) et/ou **en ce que** l'angle de vue (α) de l'optique de mesure (19) d'une ou plusieurs ou de la totalité des têtes de mesure (7-10 ; 12-17) est réglable.

5. Appareil de vérification de pneus selon l'une quelconque des revendications précédentes, **caractérisé en ce que** les têtes de mesure (7-10) pour vérifier la surface de roulement intérieure (11) du pneu (4) vérifient une partie de la surface de roulement intérieure (11) ou **en ce que** les têtes de mesure (7-10) pour vérifier la surface de roulement intérieure (11) du pneu (4) vérifient toute la surface de roulement intérieure (11) .

6. Appareil de vérification de pneus selon l'une quelconque des revendications précédentes, **caractérisé par** un dispositif pour déterminer et/ou une mémoire pour mémoriser le diamètre et/ou la hauteur du pneu (4)
et/ou par un dispositif pour le prépositionnement et/ou le positionnement d'une ou plusieurs ou de la totalité des têtes de mesure (7-10 ; 12-17) en fonction du diamètre et/ou de la hauteur du pneu (4)
et/ou par un dispositif pour déterminer et/ou pour représenter et/ou pour analyser le contour du pneu (4)
et/ou par un dispositif d'analyse des images de résultat à l'intérieur du contour.

7. Installation de vérification de pneus comprenant un appareil de vérification de pneus (28) selon l'une quelconque des revendications 1 à 5 et un dispositif de retournement de pneus (31), de préférence un dispositif de retournement de pneus (31) pour retourner le pneu (4) dans la position correcte.

8. Installation de vérification de pneus selon la revendication 7, **caractérisée par** un deuxième appareil de vérification de pneus (33) selon l'une quelconque des revendications 1 à 5.

9. Procédé pour vérifier un pneu (4) par interférométrie au moyen d'un appareil de vérification de pneus selon l'une quelconque des revendications 1 à 5,
**caractérisé en ce que**
les têtes de mesure (7-10 ; 12-17) et le pneu (4) n'effectuent aucun mouvement de rotation les uns par rapport aux autres.

10. Procédé selon la revendication 9, **caractérisé en ce que** le pneu est vérifié par interférométrie dans une chambre de pression.

11. Procédé selon la revendication 9 ou 10, **caractérisé en ce que** les têtes de mesure (7-10) pour vérifier la surface de roulement intérieure (11) du pneu (4) et/ou les têtes de mesure (12-17) pour vérifier la surface latérale extérieure (18) du pneu (4) sont déplacées dans la direction verticale,
et/ou **en ce que** les têtes de mesure (7-10) pour vérifier la surface de roulement intérieure (11) du pneu (4) et/ou les têtes de mesure (12-17) pour vérifier la surface latérale extérieure (18) du pneu (4) sont déplacées dans la direction radiale.

12. Procédé selon l'une quelconque des revendications 9 à 11, **caractérisé en ce que** les têtes de mesure (7-10) pour vérifier la surface de roulement intérieure (11) du pneu (4) vérifient une partie de la surface de roulement intérieure (11) ou la totalité de la surface de roulement intérieure (11) .

13. Procédé selon l'une quelconque des revendications 9 à 12, **caractérisé en ce qu'**une ou plusieurs ou la totalité des têtes de mesure (7-10 ; 12-17) sont prépositionnées et/ou positionnées en fonction du diamètre et/ou de la hauteur du pneu (4)
et/ou **en ce que** seulement les pixels des images de résultat qui sont situés à l'intérieur du contour du pneu sont analysés.

14. Procédé selon l'une quelconque des revendications 9 à 13, **caractérisé en ce que** le pneu (4) est vérifié au cours d'un premier passage de vérification, est retourné et est vérifié au cours d'un deuxième passage de vérification.

15. Procédé selon l'une quelconque des revendications 9 à 14, **caractérisé en ce qu'**au cours du premier passage de vérification, une moitié de la surface de roulement intérieure (11) du pneu (4) est vérifiée, **en ce que** le pneu (4) est retourné dans la position correcte et **en ce qu'**au cours d'un deuxième passage de vérification, l'autre moitié de la surface de roulement intérieure (11) du pneu (4) est vérifiée.

16. Procédé selon la revendication 14 ou 15, **caractérisé en ce qu'**un deuxième pneu est vérifié au cours d'un premier passage de vérification tandis que le premier pneu est retourné.
